(19) **Europäisches Patentamt**
**European Patent Office**
**Office européen des brevets**

(11) **EP 3 732 514 B1**

(12) **EUROPEAN PATENT SPECIFICATION**

(45) Date of publication and mention
of the grant of the patent:
**20.09.2023 Bulletin 2023/38**

(21) Application number: **18845317.9**

(22) Date of filing: **21.12.2018**

(51) International Patent Classification (IPC):
**G02B 5/08** *(2006.01)* **G02B 5/20** *(2006.01)*
**G02B 5/26** *(2006.01)* **G02B 5/22** *(2006.01)*
**F24S 70/225** *(2018.01)*

(52) Cooperative Patent Classification (CPC):
**G02B 5/0841; G02B 5/085; G02B 5/208;
G02B 5/22; G02B 5/26;** F24S 70/225

(86) International application number:
**PCT/IB2018/060529**

(87) International publication number:
**WO 2019/130199 (04.07.2019 Gazette 2019/27)**

(54) **PASSIVE COOLING ARTICLES HAVING A FLUOROPOLYMER SURFACE LAYER**

PASSIV GEKÜHLTE ARTIKEL MIT OBERFLÄCHENSCHICHT AUS FLUOROPOLYMER

ARTICLES DE REFROIDISSEMENT PASSIF AVEC UNE COUCHE DE SURFACE COMPORTANT UN POLYMÈRE FLUORÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.12.2017 US 201762611639 P**

(43) Date of publication of application:
**04.11.2020 Bulletin 2020/45**

(73) Proprietor: **3M Innovative Properties Company
Saint Paul, Minnesota 55133-3427 (US)**

(72) Inventors:
• **HEBRINK, Timothy J.
Saint Paul, Minnesota 55133-3427 (US)**
• **BLACK, William B.
Saint Paul, Minnesota 55133-3427 (US)**
• **JOHNSON, Stephen A.
Saint Paul, Minnesota 55133-3427 (US)**
• **MEYER, Kenneth A.P.
Saint Paul, Minnesota 55133-3427 (US)**
• **MILLER, Craig A.
Saint Paul, Minnesota 55133-3427 (US)**
• **PATZMAN, Derek W.
Saint Paul, Minnesota 55133-3427 (US)**

(74) Representative: **Mathys & Squire
Theatinerstraße 7
80333 München (DE)**

(56) References cited:
**WO-A1-2016/205717 WO-A1-2017/151514
CN-A- 105 885 562 US-A1- 2011 262 754
US-A1- 2015 338 175 US-A1- 2017 248 381**

• **EDEN REPHAELI ET AL: "Ultrabroadband
Photonic Structures To Achieve
High-Performance Daytime Radiative Cooling",
NANO LETTERS, 11 March 2013 (2013-03-11),
XP055414069, US ISSN: 1530-6984, DOI:
10.1021/nl4004283**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Cross Reference to Related Application

This application claims the benefit of U.S. Provisional Patent Application No. 62/611639, filed December 29, 2017.

### BACKGROUND

Passive cooling without external energy sources may be appealing for reducing electricity needed in applications such as refrigeration, air conditioning, and battery cooling for electric vehicles. Some have investigated the ability to conduct passive cooling during the day. Some have begun to commercialize cooling panels made with films for passive cooling. Prior art WO2017/151514A1, US2017/248381 and US2015/338175 disclose passive cooling systems known in the state of the art, comprising an emissive layer having a high absorbance in the atmospheric window region and a reflective layer having an elevated average reflectance in the solar region.

### SUMMARY

The present disclosure provides passive cooling. In particular, the present disclosure relates to passive cooling articles having a fluoropolymer surface layer. In some embodiments, the fluoropolymer surface layer absorbs no more than 10% (in some embodiments, no more than 5%, or even no more than 1%) solar energy while having absorption of at least 80% (in some embodiments, at least 85%, 90%, 95%, or even at least 99%) per unit thickness, in the atmospheric window region (e.g., a frequency band in a range from 8 to 13 micrometers). The fluoropolymer layer may be used in at least one of a skin layer (e.g., a coating) or optical layer in a multi-layer optical film. In some embodiments, the fluoropolymer surface layer may include inorganic particles (e.g., dispersed in or disposed on a layer) or surface structures (e.g., micro-replicated or extruded onto a layer) to further improve absorption or emissivity.

The invention is defined in the independent claim. Further advantageous embodiments are defined in the dependent claims.

As used herein, the term "light" refers to electromagnetic energy of any wavelength. In some embodiments, light means electromagnetic energy having a wavelength of at most 16 micrometers, or at most 13 micrometers. In some embodiments, light means radiant energy in a region of the electromagnetic spectrum from 0.25 to 16 micrometers.

As used herein, the "solar region" of the electromagnetic spectrum refers to a portion of the electromagnetic spectrum that partially or fully includes sunlight or solar energy. The solar region may include at least one of the visible, ultraviolet, or infrared wavelengths of light. The solar region may be defined as wavelengths in a range from 0.35 to 2.5 micrometers or an even greater range.

As used herein, the "atmospheric window region" of the electromagnetic spectrum refers to a portion of the electromagnetic spectrum that partially or fully includes wavelengths that can be transmitted through the atmosphere. The atmospheric window region may include at least some infrared wavelengths of light. The atmospheric window region may be defined as wavelengths ranging from 8 to 13 micrometers, or an even greater range.

As used herein, the terms "transmittance" and "transmission" refer to the ratio of total transmission of a layer of a material compared to that received by the material, which may account for the effects of absorption, scattering, reflection, etc. Transmittance (T) may range from 0 to 1 or be expressed as a percentage (T%).

The term "average transmittance" refers to the arithmetic mean of a sample of transmittance measurements over a range of wavelengths.

Transmission can be measured with methods described in ASTM E1348-15e1 (2015). A Lambda 1050 spectrophotometer equipped with an integrating sphere was used to make transmission measurements described herein. The Lambda 1050 was configured to scan from 250 nanometer wavelengths of light to 2500 nanometer wavelengths of light at 5 nanometer intervals in transmission mode. Background scans are conducted with no sample in the light path before the integrating sphere, and the standard spectralon covers over the integrating sphere ports. After background scans are made, the film sample is placed in the light path by covering the entrance port to the integrating sphere with the film sample. Light transmission spectrum scans are made using the standard detectors for a range from 250 nanometers to 2500 nanometers and recorded by the software provided with the Lambda 1050.

As used herein, the term "minimum transmittance" refers to the lowest transmittance value over a range of wavelengths.

As used herein, the terms "reflectance" and "reflectivity" refer to the effectiveness in reflecting light for a surface of an object. The term "average reflectance" refers to at least one of: a measurement of the reflectance of uniformly unpolarized light (for at least one incidence angle) or the average of reflectance measurements of two or more polarizations of light (for example, s and p polarizations, for at least one angle of incidence).

Reflection can be measured with methods described in ASTM E1349-06 (2015). A Lambda 1050 spectrophotometer equipped with an integrating sphere was used to make reflection measurements described herein. The Lambda 1050 was configured to scan from 250 nanometers to 2500 nanometers at 5 nanometer intervals in reflection mode. Background scans are conducted with no sample in the light path and spectralon standards covering the integrating sphere ports. After background scans are made, the spectralon standard at the back of the integrating sphere is replaced with the film sample. Light reflection spectrum scans are made using the standard detectors for a range from 250 nanometers to 2500 nanometers and recorded by the software provided with the Lambda 1050.

As used herein, "emissivity" of a surface of a material is its effectiveness in emitting energy as thermal radiation. The emissivity may be described as a ratio of the radiant exitance of the surface compared to that of a black body at the same temperature as the surface and can range from 0 to 1.

Emissivity can be measured using infrared imaging radiometers with methods described in ASTM E1933-99a (2010).

As used herein, the term "absorbance" refers to the base 10 logarithm of a ratio of incident radiant power to transmitted radiant power through a material. The ratio may be described as the radiant flux received by the material divided by the radiant flux transmitted by the material. Absorbance (A) may be calculated based on transmittance (T) according to Equation 1:

$$A = -\log_{10} T = 2 - \log_{10} T\% \qquad (1).$$

As used herein, the term "absorptivity" of a surface of a material is its effectiveness in absorbing radiant energy. The absorptivity may be described as a ratio of the radiant flux absorbed by the surfaced compared to that received by the surface. As known to those of ordinary skill in the art, emissivity is equal to the absorptivity of the surface of the material. In other words, a high absorbance means high emissivity, and a low absorbance means low emissivity. Therefore, emissivity and absorptivity may be used interchangeably throughout this disclosure to describe this property of the material.

Absorbance in the solar region can be measured with methods described in ASTM E903-12 (2012). Absorbance measurements described herein were made by making transmission measurements as previously described and then calculating absorbance using Equation 1.

As used herein, the term "minimum absorbance" refers to the lowest absorbance value over a range of wavelengths.

As used herein, the term "average absorbance" refers to the arithmetic mean of a sample of absorbance measurements over a range of wavelengths. For example, absorbance measurements in a range from 8 to 13 micrometers can be averaged over that range.

As used herein, the terms "polymer" and "polymeric material" include, but are not limited to, organic homopolymers, copolymers, such as for example, block, graft, random and alternating copolymers, terpolymers, etc., and blends and modifications thereof. Furthermore, unless otherwise specifically limited, the term "polymer" shall include all possible geometrical configurations of the material. These configurations include, but are not limited to, isotactic, syndiotactic, and atactic symmetries.

As used herein, the term "fluoropolymer" refers to any polymer having fluorine. In some embodiments, a fluoropolymer may be described as a fluoroplastic or, more particularly, a fluorothermoplastic (e.g., fluorothermoplastics available under the trade designation "3M DYNEON THV" from the 3M Company, St. Paul, MN).

As used herein, the term "comprises" and variations thereof do not have a limiting meaning where these terms appear in the description and claims. Such terms will be understood to imply the inclusion of a stated step or element or group of steps or elements but not the exclusion of any other step or element or group of steps or elements. By "consisting of" is meant including, and limited to, whatever follows the phrase "consisting of." Thus, the phrase "consisting of" indicates that the listed elements are required or mandatory, and that no other elements may be present. By "consisting essentially of" is meant including any elements listed after the phrase, and limited to other elements that do not interfere with or contribute to the activity or action specified in the disclosure for the listed elements. Thus, the phrase "consisting essentially of" indicates that the listed elements are required or mandatory, but that other elements are optional and may or may not be present depending upon whether or not they materially affect the activity or action of the listed elements. Any of the elements or combinations of elements that are recited in this specification in open-ended language (for example, comprise and derivatives thereof) are considered to additionally be recited in closed-ended language (e.g., consist and derivatives thereof) and in partially closed-ended language (e.g., consist essentially, and derivatives thereof).

In this application, terms such as "a," "an," and "the" are not intended to refer to only a singular entity, but include the general class of which a specific example may be used for illustration. The terms "a," "an," and "the" are used interchangeably with the term "at least one." The phrases "at least one of" and "comprises at least one of" followed by a list refers to any one of the items in the list and any combination of two or more items in the list.

As used herein, the term "or" is generally employed in its usual sense including "and/or" unless the content clearly dictates otherwise.

The term "and/or" means one or all of the listed elements or a combination of any two or more of the listed elements.

As used herein, all numbers are assumed to be modified by the term "about" and in certain embodiments, preferably, by the term "exactly." As used herein in connection with a measured quantity, the term "about" refers to that variation in the measured quantity as would be expected by the skilled artisan making the measurement and exercising a level of care commensurate with the objective of the measurement and the precision of the measuring equipment used. Herein, "at least," "at most," and "up to" a number (e.g., up to 50) includes the number (e.g., 50).

As used herein, the recitations of numerical ranges by endpoints include all numbers subsumed within that range as well as the endpoints (e.g., 1 to 5 includes 1, 1.5, 2, 2.75, 3, 3.80, 4, 5, etc.).

The terms "in the range," "ranging from," and "within a range" (and similar statements) includes the endpoints of the stated range.

Reference throughout this specification to "one embodiment," "an embodiment," "certain embodiments," or "some embodiments," etc., means that a particular feature, configuration, composition, or characteristic described in connection with the embodiment is included in at least one embodiment of the invention. Thus, the appearances of such phrases in various places throughout this specification are not necessarily referring to the same embodiment of the invention. Furthermore, the particular features, configurations, compositions, or characteristics may be combined in any suitable manner in at least one embodiment.

The above summary of the present disclosure is not intended to describe each disclosed embodiment or every implementation of the present invention. The description that follows more particularly exemplifies illustrative embodiments. In several places throughout the application, guidance is provided through lists of examples, which examples may be used in various combinations. In each instance, the recited list serves only as a representative group and should not be interpreted as an exclusive list.

BRIEF DESCRIPTION OF THE DRAWINGS

FIG. 1 is a perspective illustration of an environment during the day for use with a passive cooling article and a substrate. The passive cooling article reflects sunlight and radiates or emits electromagnetic energy (e.g., infrared light).

FIG. 2 is a perspective illustration of an environment during the night for use with the passive cooling article of FIG. 1. The passive cooling article radiates or emits electromagnetic energy (e.g., infrared light).

FIG. 3 is a graph showing a solar region energy spectrum described as terrestrial reference spectrum found in ASTM G173-03 (2012), an atmospheric window region energy transmission % spectrum in the infrared region, and an absorptivity spectrum for the passive cooling article of FIG. 1.

FIG. 4 is a cross-sectional illustration showing layers of the passive cooling article of FIG. 1.

FIG. 5 is a graph showing the absorbance of a fluoropolymer and a complementary absorbance of a non-fluorinated polymer.

FIG. 6 is a top-down view of a surface of an outer layer of the passive cooling article of FIG. 4.

FIG. 7 is a graph showing the diameter distribution of various micro-sized beads that may be used in the passive cooling article of FIG. 4.

FIG. 8 is an illustration of a surface structure according to a first embodiment that may be used on the surface shown in FIG. 6.

FIG. 9 is an illustration of a surface structure according to a second embodiment that may be used on the surface shown in FIG. 6.

FIG. 10 is an illustration of a surface structure according to a third embodiment that may be used on the surface shown in FIG. 6.

FIG. 11 an illustration of a surface structure according to a fourth embodiment that may be used on the surface shown in FIG. 6.

FIG. 12 is a graph showing transmittance spectra including a solar region of the electromagnetic spectrum for various fluoropolymer materials that may be used in the passive cooling article of FIG. 4.

FIG. 13 is a graph showing transmittance spectra including an atmospheric window region of the electromagnetic spectrum for various fluoropolymer materials that may be used in the passive cooling article of FIG. 4.

FIG. 14 is a graph showing reflectance according to one embodiment of the passive cooling article.

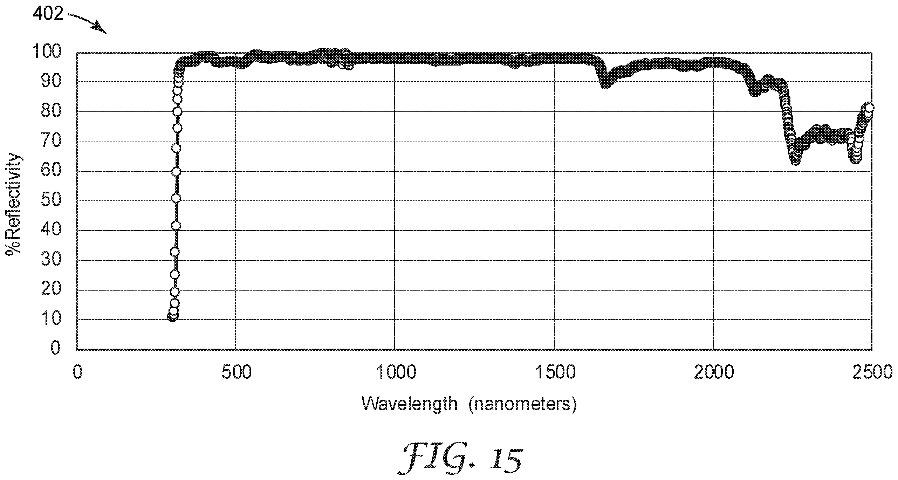

FIG. 15 is a graph showing a reflectance spectrum according to the one embodiment of the passive cooling article of FIG. 14.

FIG. 16 is a graph showing reflectance according to another embodiment of the passive cooling article.

DETAILED DESCRIPTION

In general, the present disclosure provides passive cooling articles having at least one fluoropolymer. More particularly, the passive cooling articles may be applied to a substrate, or object, to reflect light in a solar region of the electromagnetic spectrum and radiate light in an atmospheric window region of the electromagnetic spectrum, both of which may cool the substrate. Although reference is made herein to certain applications, the passive cooling article may be used in any outdoor environment to cool a structure, particularly structures exposed to sunlight. Non-limiting examples of applications of the passive cooling article include commercial building air conditioning, commercial refrigeration (e.g., supermarket refrigerators), data center cooling of heat transfer fluid systems, power generator cooling, or vehicle air conditioning or refrigeration (e.g., cars, trucks, trains, buses, ships, airplanes, etc.), or cooling of electric vehicle batteries. Various other applications will become apparent to one of skill in the art having the benefit of the present disclosure.

Significant amounts of energy can be absorbed by objects exposed to sunlight. Advantageously, the present disclosure provides a passive cooling article that can address cooling needs in a passive manner during the day and at night. Passive cooling may reduce the overall energy required to maintain a suitable temperature, which may significantly reduce operational costs and reduce greenhouse gas emissions, especially in vehicular applications where fossil fuels may be used to provide air conditioning or refrigeration. Further, passive cooling may reduce the overall demand for water, for example, in cooling towers and spray ponds that evaporate water for cooling, which may be particularly beneficial in areas lacking abundant access to water.

The passive cooling article includes at least three layers of material that include a fluoropolymer. At least one fluoropolymer is used in an outer layer and in a reflector to provide reflectance in the solar region and absorption in the atmospheric window region. Reflectance in the solar region may be particularly effective in facilitating cooling during the day when subjected to sunlight by reflecting sunlight that would otherwise be absorbed by the object. Absorption in the atmospheric window region may be particularly effective in facilitating cooling at night by radiating or emitting infrared light. Energy may also be radiated or emitted during the day to some degree. In some embodiments, the outer layer of the article will absorb a minimum of solar energy from 0.3 to 2.5 micrometers and absorb a maximum of solar energy from 8 to 14 micrometers.

The use of a multi-layer optical film as the reflector may provide a reflectance that is greater than even a silvered mirror. In some embodiments, a reflector reflects a maximum amount of solar energy in a range from 300 to 2500 nanometers (nm). In particular, the use of a fluoropolymer in at least one layer of the multi-layer optical film may provide a reflectance that is greater than other conventional multi-layer optical films. Further, fluoropolymers may facilitate a multi-layer optical film that is thinner than conventional multi-layer optical films while providing a similar reflectance. A thinner reflector may facilitate a more effective cooling of the object by allowing heat to transfer more quickly to the outer layer for passive radiation cooling. To facilitate a highly absorptive, or emissive, outer layer to facilitate passive radiation cooling, the outer layer includes fluoropolymer(s) and may further include at least one of inorganic particles, or a surface structure(s). In some embodiments, the passive radiation article may be capable of cooling up to 11.1° C (e.g., 20° F). In some embodiments, the article may form part of a cooling panel that may be disposed on the exterior of at least part of a building or a heat transfer system. The heat transfer system can cool a fluid, liquid or gas, which can then be used to remove heat from a building or vehicle, including an electric vehicle battery. The outer layer may be suitable for protecting the reflector, particularly, in outdoor environments. Including the outer layer may also facilitate ease of manufacturing, particularly during co-extrusion with the reflector.

Reference will now be made to the drawings, which depict at least one aspect described in this disclosure. However, it will be understood that other aspects not depicted in the drawings fall within the scope of this disclosure. Like numbers used in the figures refer to like components, steps, and the like. However, it will be understood that the use of a reference character to refer to an element in a given figure is not intended to limit the element in another figure labeled with the same reference character. In addition, the use of different reference characters to refer to elements in different figures is not intended to indicate that the differently referenced elements cannot be the same or similar.

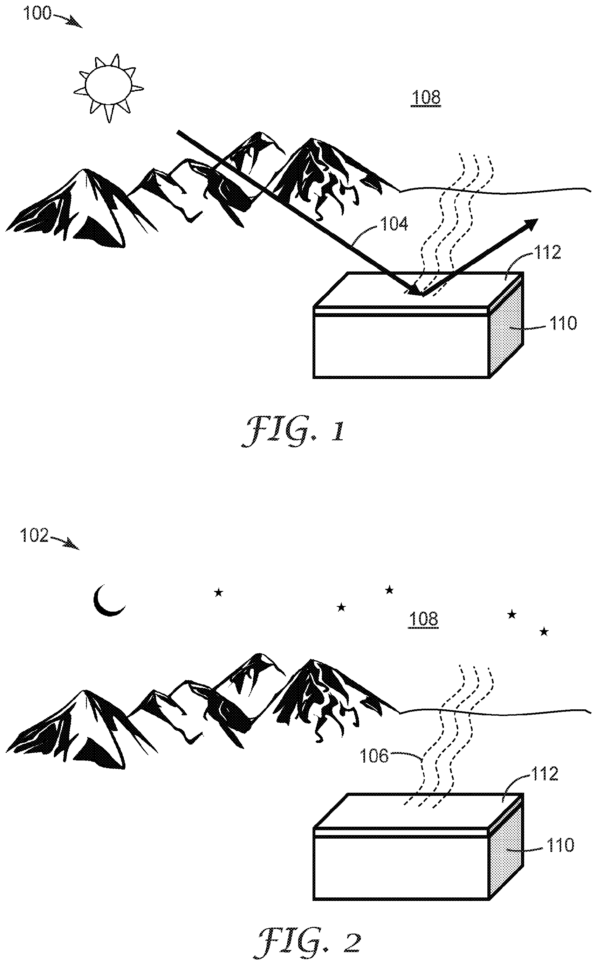

FIGS. 1 and 2 show examples of environments 100, 102 in which passive cooling article 112 may be used to cool substrate 110 (for example, a panel coupled to a building or a heat transfer system). Article 112 may be disposed or applied to an exterior surface of substrate 110, particularly an exterior surface exposed to sunlight (e.g., an upper surface). In particular, article 112 may be thermally coupled to substrate 110, which may allow for heat transfer therebetween. Article 112 may be suitable for outdoor environments and have, for example, a suitable operating temperature range, water resistance, and ultraviolet (UV) stability.

Resistance to photo-oxidation can be measured by changes in reflectivity or changes in color. Passive radiation cooling films described herein may not have a change in reflectivity of greater than 5% over at least 5 years. Passive radiation cooling films described herein may not have a change in color, described as b* per ASTM G-155-13 (2013), of greater than 5 after exposure to 18,700 kJ/m$^2$ at 340 nanometers. One mechanism for detecting the change in physical characteristics is the use of the weathering cycle described in ASTM G155-05a (October 2005) using a D65 light source in the reflected mode. Under the noted test, the article should withstand an exposure of at least 18,700 kJ/m$^2$ at 340 nanometers without change in reflectivity, color, onset of cracking, or surface pitting.

Article 112 may be used to cover part or all of substrate 110. Article 112 may be generally planar in shape. Article 112, however, does not need to be planar and may be flexible to conform to substrate 110.

Article 112 may reflect light 104 in the solar region of the electromagnetic spectrum to cool substrate 110, which may be particularly effective in daytime environment 100. Without article 112, light 104 may have otherwise been absorbed by the substrate 110 and converted into heat. Reflected sunlight 104 may be directed into atmosphere 108.

Article 112 may radiate light 106 in the atmospheric window region of the electromagnetic spectrum into atmosphere 108 to cool substrate 110, which may be particularly effective in the nighttime environment 102. Article 112 may allow heat to be converted into light 106 (e.g., infrared light) capable of escaping atmosphere 108 through the atmospheric window. The radiation of light 106 may be a property of article 112 that does not require additional energy and may be described as passive radiation, which may cool article 112 and substrate 110 thermally coupled to article 112. During the day, the reflective properties allow the article **112** to emit more energy than is absorbed. The radiative properties in combination with the reflective properties, to reflect sunlight during the day, the article **112** may provide more cooling than an article that only radiates energy through the atmosphere and into space.

Among other parameters, the amount of cooling and temperature reduction may depend on the reflective and absorptive properties of article **112**. The cooling effect of article **112** may be described with reference to a first temperature of the ambient air proximate or adjacent to the substrate and a second temperature of the portion of substrate **110** proximate or adjacent to article **112**. In some embodiments, the first temperature is greater than the second temperature by at least 2.7 (in some embodiments, at least 5.5, 8.3, or even at least 11.1) degrees Celsius (e.g., at least 5, 10, 15, or even at least 20 degrees Fahrenheit).

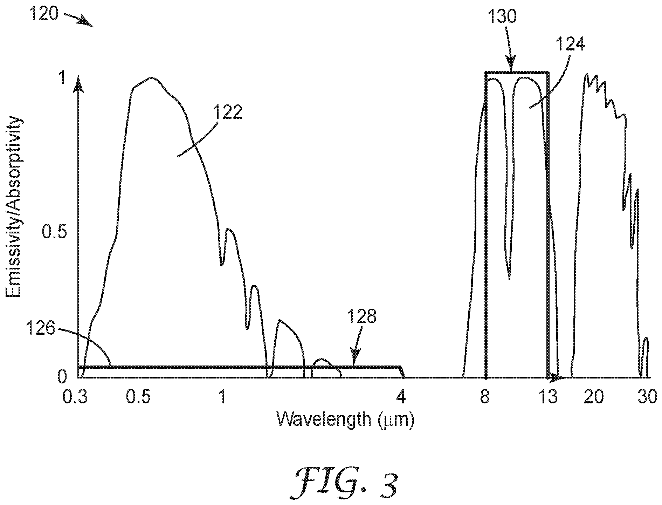

FIG. 3 shows a graph **120** of an energy spectrum in solar region **122**, described as terrestrial reference spectrum found in ASTM G173-03 (2012), an energy transmission % spectrum in atmospheric window region **124** (e.g., from 0 to 1), and absorption **126** (e.g., absorptivity or emissivity, as shown on the y-axis from 0 to 1) of a passive cooling article, such as passive cooling article **112 (FIGS. 1** and **2).**

Reflective band **128** of wavelengths that partially or fully covers the wavelengths of solar region **122** may be defined in absorption **126** of article **112**. In some embodiments, the wavelength range of solar region **122** or reflective band width **128** may be in a range from 0.35 to 2.5 micrometers, 0.35 to 3.0 micrometers, or even 0.3 to 4.0 micrometers.

In reflective band **128**, the surface layer of the passive cooling article may transmit most of the light in solar region **122** of the electromagnetic spectrum. For example, absorption of solar energy by the surface layer, absorptivity or absorption **126**, may be at most 20% (in some embodiments, at most 15%, 10%, 5%, or even at most 1%). In some embodiments, to cover solar region **122** in terms of absorptivity, the absorptivity **126** may be at most 0.5 (in some embodiments, at most 0.4, 0.3, 0.2, 0.1, or even at most 0.05) in solar energy spectrum region **122** or reflective band **128.**

Absorptive band **130** of wavelengths that partially or fully covers the wavelengths of atmospheric window region **124** may be defined in absorption **126** of article **112**. In some embodiments, the wavelength range of atmospheric window region **124** or absorption band width **130** may be in a range from 8 to 13 micrometers, 7 to 14 micrometers, 6 to 14 micrometers, or even 5 to 14 micrometers.

In absorptive band **130,** the passive cooling article may absorb most of the light in atmospheric window region **124** of the electromagnetic spectrum. For example, absorption **126** in absorptive band **130** may be at least 80% (in some embodiments, at least 85%, 90%, 95%, or even at least 99%). In some embodiments, absorption **126** may be at least 0.5 (in some embodiments, at least 0.6, 0.7, 0.8, at least 0.9, or even equal to 1) in absorptive band **130.**

Absorption **126** in absorptive band **130** may also be described in terms of absorbance (e.g., the logarithm of transmission). In some embodiments, the absorbance in absorptive band **130** may be at least 0.8 (in some embodiments, at least 1, 1.5, 2, 2.5, 3, 3.5, 4, 4.5, or even at least 5). In some embodiments, absorbance of the article is at least 1 (in some embodiments, at least 2, or even at least 3).

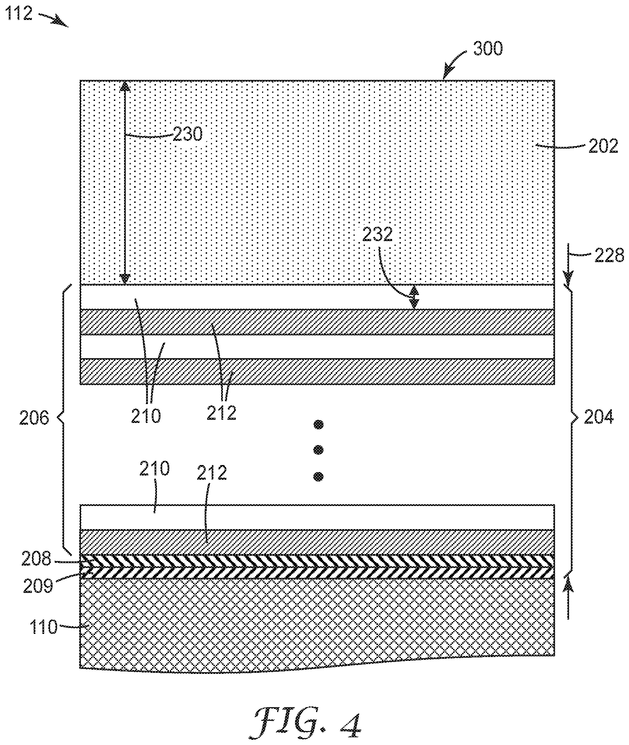

FIG. 4 shows one example of passive cooling article **112** disposed on substrate **110,** which may be used to reflect light in solar region **122 (FIG. 3)** and to radiate light in atmospheric window region **124 (FIG. 3).** Article **112** may include multiple components, which may cooperatively provide reflective and absorptive properties described herein to cool substrate **110**. In some embodiments, article **112** is thermally coupled to substrate **110** to transfer heat therebetween. In some embodiments, substrate 110 is coupled to a fluid, liquid or gas, which can transfer heat away from another article (such as a building, battery, refrigerator, freezer, air conditioner, photovoltaic module).

In some embodiments, such as the one depicted, article **112** may have reflector **204** with high reflectance in the solar region to reflect light in the solar region and may have outer layer **202** with a high transmittance in the solar region to allow light to pass through to the reflector. Outer layer **202** may also have a high absorbance in the atmospheric window region to radiate energy in wavelengths of the atmospheric window region away from the article. In some embodiment, outer layer **202** is thermally coupled to reflector **204** to transfer heat therebetween. Heat from substrate **110** transferred to reflector **204** may be further transferred to outer layer **202,** which may be radiated as light in the atmospheric window region to cool substrate **110** at night and during the day.

Outer layer **202** may partially or fully cover reflector **204**. In general, outer layer **202** may be positioned between reflector **204** and at least one source of solar energy (e.g., the sun). Outer layer **202** may be exposed to elements in an outdoor environment and may be formed of material particularly suited for such environments.

Outer layer **202** may be formed of material that provides high transmittance in the solar region or high absorptivity in the atmospheric window region, preferably both. The material of outer layer **202** includes at least one polymer in the form of a fluoropolymer.

Outer layer **202** has a minimum absorbance or average absorbance in the atmospheric window region of at least 0.15 (in some embodiments, at least 0.3, 0.45, 0.6, 0.8, 1 1.5, 2, 2.5, 3, 3.5, 4, 4.5, or even at least 5).

Reflector **204** may partially or fully cover the substrate **110**. In general, reflector **204** may be positioned between substrate **110** and the outer layer **202** or at least one source of solar energy. Reflector **204** may be protected from environmental elements by outer layer **202.**

Reflector **204** has an average reflectance in the solar region of at least 85% (in some embodiments, at least 90%, 91%, 92%, 93%, 94%, 95%, 96%, 97%, 98%, 99%, or even at least 99.5%).

In some embodiments, reflector **204** may be thin to facilitate heat transfer from substrate **110** to outer layer **202.** In general, thinner reflector **204** may provide better heat transfer. In some embodiments, overall thickness **228** of reflector **204** is at most 50 (in some embodiments, at most 40, 30, 25, 20, 15, or even at most 10) micrometers.

Reflector **204** includes multi-layer optical film **206** and may include metallic layer **208**. Metallic layer **208** (described herein in more detail) may be disposed between film **206** and the substrate **110**. Film **206** may be disposed between outer layer **202** and substrate **110**. Film **206** may be coupled to substrate **110,** for example, by an adhesive layer **209**. The adhesive layer **209** may be disposed between the metallic layer **208** and the substrate **110**. The adhesive layer may comprise thermally conductive particles to aid in heat transfer. Thermally conductive particles include aluminum oxide and alumina nanoparticles. Additional thermally conductive particles for the adhesive layer include those available under the trade designation "3M BORON DINITRIDE" from 3M Company.

Film **206** may include at least layer that defines reflective band **128 (FIG. 3).** Film **206** includes plurality of first optical layers **210** and plurality of second optical layers **212.** Layers **210, 212** in film **206** may alternate or be interleaved, and have different refractive indices. Each first optical layer **210** may be adjacent to second optical layer **212,** or vice versa. Most of first optical layers **210** may be disposed between adjacent second optical layers **212,** or vice versa (e.g., all layers except one).

Reflective band **128 (FIG. 3)** may be defined by the number of optical layers, the thicknesses, and the refractive indices of optical layers **210, 212** as known by a person of ordinary skill in the art of making reflective multi-layer optical films.

In some embodiments, film **206** has up to 1000 (in some embodiments, up to 700, 600, 500, 400, 300, 250, 200, 150, or even up to 100) total optical layers **210, 212.**

The thicknesses of optical layers **210, 212** in one film **206** may vary. Optical layers **210, 212** may define a maximum thickness **232**. Some of optical layers **210, 212** may be thinner than the maximum thickness **232.** The maximum thickness **232** of optical layers **210, 212** may be much smaller than a minimum thickness **230** of outer layer **202.** Outer layer **202** may also be described as a skin layer. In some embodiments, outer layer **202** may provide structural support for film **206,** particularly when outer layer **202** is co-extruded with film **206.** In some embodiments, minimum thickness **230** of outer layer **202** is at least 5 (in some embodiments, at least 10, or even at least 15) times greater than maximum thickness **232** of optical layers **210, 212.**

The refractive indices of optical layers **210, 212** may be different. First optical layer **210** may be described as a low index layer and second optical layer **212** may be described as a high index layer, or vice versa. In some embodiments, a first refractive index (or average refractive index) of the low index layers is less than a second refractive index (or average refractive index) of the high index layers by at least 4% (in some embodiments, at least 5%, 10%, 12.5%, 15%, 20%, or even at least 25%). In some embodiments, the first refractive index of the low index layer may be at most 1.5 (in some embodiments, at most 1.45, 1.4, or even at most 1.35. In some embodiments, the second refractive index of the high index layer may be at least 1.4 (in some embodiments, at least 1.42, 1.44, 1.46, 1.48, 1.5, 1.6, or even at least 1.7).

Film **206** may be formed of at least one material that provide high reflectance in the solar region. The material of film **206** includes at least one polymer in form of a fluoropolymer. At least one of the materials used to form film **206** may be the same or different as at least one material used to form outer layer **202**. Both film **206** and outer layer **202** include a fluoropolymer. The composition of the fluoropolymers may be the same or different in film **206** compared to outer layer **202**.

In some embodiments, first optical layer **210** is formed of different material than second optical layer **212.** The first optical layers **210** include a fluoropolymer. The second optical layers **212** may include a fluoropolymer or include a non-fluorinated polymer. In some embodiments, the first optical layer includes a fluoropolymer and the second optical layer includes a non-fluorinated polymer.

In some embodiments, multilayer optical films described herein can be made using general processing techniques, such as those described in U.S. Pat. No. 6,783,349 (Neavin et al.).

Desirable techniques for providing a multilayer optical film with a controlled spectrum may include, for example, (1) the use of an axial rod heater control of the layer thickness values of coextruded polymer layers as described, for example, in U.S. Pat. No. 6,783,349 (Neavin et al.); (2) timely layer thickness profile feedback during production from a layer thickness measurement tool such as, for example, an atomic force microscope (AFM), a transmission electron microscope, or a scanning electron microscope; (3) optical modeling to generate the desired layer thickness profile; and (4) repeating axial rod adjustments based on the difference between the measured layer profile and the desired layer profile.

In some embodiments, the basic process for layer thickness profile control may involve adjustment of axial rod zone power settings based on the difference of the target layer thickness profile and the measured layer profile. The axial rod power increase needed to adjust the layer thickness values in a given feedblock zone may first be calibrated in terms of watts of heat input per nanometer of resulting thickness change of the layers generated in that heater zone. For example, fine control of the spectrum is possible using 24 axial rod zones for 275 layers. Once calibrated, the necessary power adjustments can be calculated once given a target profile and a measured profile. The procedure is repeated until the two profiles converge.

In one aspect, the article of the present disclosure includes a UV light reflective multi-layer optical film reflecting a wavelength range from 350 to 450 nanometers made with 150 high refractive index layers comprising a CoPMMA (e.g., available under the trade designation "PERSPEX CP63" from Lucite International, Cordova, TN) alternating with 150 low refractive index layer comprising a fluoropolymer (e.g., available under the trade designation "3M DYNEON THV221" from 3M Company), and a visible light reflective multi-layer optical film reflecting a wavelength range from 450 to 750 nanometers made with 150 high refractive index layers comprising a PET (e.g., available under the trade designation "EASTAPAK 7452" from Eastman Chemical Company, Kingsport, TN), alternating with 150 low refractive index layers comprising a fluoropolymer (e.g., available under the trade designation "3M DYNEON THV221" from 3M Company). The surface of the visible light reflective multilayer optical film opposite the UV light reflective multi-layer optical film is coated with 100 nanometers of copper (Cu). The surface of the UV light reflective multilayer optical film opposite the visible light reflective mirror is a layer having fluoropolymer (e.g., available under the trade designation "3M DYNEON THV815" from 3M Company).

Non-limiting examples of fluoropolymers that may be used in at least one layer of article 112 include: a polymer of tetrafluoroethylene (TFE), hexafluoropropylene (HFP), and vinylidene fluoride (e.g., available under the trade designation "3M DYNEON THV" from 3M Company), a polymer of TFE, HFP, vinylidene fluoride, and perfluoropropyl vinyl ether (PPVE) (e.g., available under the trade designation "3M DYNEON THVP" from 3M Company), a polyvinylidene fluoride (PVDF) (e.g., "3M DYNEON PVDF 6008" available from 3M Company), an ethylene chlorotrifluoroethylene (ECTFE) polymer (e.g., available under the trade designation "HALAR 350LC ECTFE" from Solvay, Brussels, Belgium), an ethylene tetrafluoroethylene (ETFE) (e.g., available under the trade designation "3M DYNEON ETFE 6235" from 3M Company), a perfluoroalkoxy alkane (PFA) polymer, a fluorinated ethylene propylene (FEP) polymer, a polytetrafluoroethylene (PTFE), a polymer of TFE, HFP, and ethylene (e.g., available under the trade designation "3M DYNEON HTE1705" from 3M Company), or various combinations thereof. In general, various combinations of fluoropolymers can be used. In some embodiments, the fluoropolymer includes FEP. In some embodiments, fluoropolymer includes PFA.

Examples of fluoropolymers include those available, for example, from 3M Company under the trade designations "3M DYNEON THV221GZ" (39 mol% tetrafluoroethylene, 11 mol% hexafluoropropylene, and 50 mol% vinylidene fluoride), "3M DYNEON THV2030GZ" (46.5 mol% tetrafluoroethylene, 16.5 mol% hexafluoropropylene, 35.5 mol% vinylidene fluoride, and 1.5 mol% perfluoropropyl vinyl ether), "3M DYNEON THV610GZ" (61 mol% tetrafluoroethylene, 10.5 mol% hexafluoropropylene, and 28.5 mol% vinylidene fluoride), and "3M DYNEON THV815GZ" (72.5 mol% tetrafluoroethylene, 7 mol% hexafluoropropylene, 19 mol% vinylidene fluoride, and 1.5 mol% perfluoropropyl vinyl ether). Examples of fluoropolymers also include PVDF available, for example, under the trade designations "3M DYNEON PVDF 6008" and "3M DYNEON PVDF 11010" from 3M Company; FEP available, for example, under the trade designation "3M DYNEON FLUOROPLASTIC FEP 6303Z" from 3M Company; and ECTFE available, for example, under the trade designation "HALAR 350LC ECTFE" from Solvay.

Non-limiting examples of non-fluorinated polymers that may be used in at least one layer of article 112 include at least one of: a polyethylene terephthalate (PET), a co-polymer of ethyl acrylate and methyl methacrylate (co-PMMA), a polypropylene (PP), a polyethylene (PE), a polyethylene copolymer, a polymethyl methacrylate (PMMA), an acrylate copolymer, a polyurethane, or various combinations thereof. In general, various combinations of non-fluorinated polymers can be used.

Exemplary isotropic optical polymers, especially for use in the low refractive index optical layers, may include homopolymers of polymethylmethacrylate (PMMA), such as those available from Ineos Acrylics, Inc., Wilmington, DE, under the trade designations "CP71" and "CP80;" and polyethyl methacrylate (PEMA), which has a lower glass transition temperature than PMMA. Additional useful polymers include copolymers of PMMA (CoPMMA), such as a CoPMMA made from 75 wt.% methylmethacrylate (MMA) monomers and 25 wt.% ethyl acrylate (EA) monomers, (e.g., available under the trade designation "PERSPEX CP63" from Ineos Acrylics, Inc., or available under the trade designation "ATOGLAS 510" from Arkema, Philadelphia, PA), a CoPMMA formed with MMA comonomer units and n-butyl methacrylate (nBMA) comonomer units, or a blend of PMMA and poly(vinylidene fluoride) (PVDF). Additional exemplary optical polymers for Layer A include acrylate triblock copolymers, where each endblock of at least one of the first block copolymer, the second block copolymer, or the at least one additional block copolymer is comprised of poly(methyl methacrylate), and further wherein each midblock of at least one of the first block copolymer or the second block copolymer is comprised of poly(butyl acrylate). In some exemplary embodiments, at least one of the first block copolymer, the second block copolymer, or the at least one additional block copolymer is comprised of from 30 wt.% to 80 wt.% endblocks, and from 20 wt.% to 70 wt.% midblocks, based on a total weight of the respective block copolymer. In certain particular exemplary embodiments, at least one of the first block copolymer, the second block copolymer, or the at least one additional block copolymer is comprised of from 50 wt.% to 70 wt.% endblocks, and from 30 wt.% to 50 wt.% midblocks, based on the total weight of the respective block copolymer. In any of the foregoing exemplary embodiments, the first block copolymer may be selected to be the same as the second block copolymer. Triblock acrylate copolymers are available, for example, under the trade designation "KURARITY LA4285" from Kuraray America, Inc., Houston, TX.

Additional suitable polymers for the optical layers, especially for use in the low refractive index optical layers, may include at least one of: polyolefin copolymers, such as poly (ethylene-co-octene) (PE-PO) (e.g., available under the trade designation "ENGAGE 8200" from Dow Elastomers, Midland, MI), poly (propylene-co-ethylene) (PPPE) (e.g., available under the trade designation "Z9470" from Atofina Petrochemicals, Inc., Houston, TX), and a copolymer of atactic polypropylene (aPP) and isotactic polypropylene (iPP). The multilayer optical films can also include, for example, in the second layers, a functionalized polyolefin, such as linear low-density polyethylene-graft-maleic anhydride (LLDPE-g-MA) (e.g., available under the trade designation "BYNEL 4105" from E.I. du Pont de Nemours & Co., Inc., Wilmington, DE).

Non-limiting examples of polyethylene copolymers include copolymers, for example, available under the trade designation "ENGAGE" from Atofina Petrochemicals, Inc. Houston, TX, copolymers available under the trade designation "TPX" from Mitsui Chemicals, Osaka, Japan, or cyclic olefin copolymers available under the trade designation "COC" from Zeon Chemicals, Louisville, KY. In general, various combinations of polyethylene copolymers can be used.

Material may be selected based on absorbance or transmittance properties described herein, as well as on refractive index. In general, the greater the refractive index between two materials in film 206, the thinner the film can be, which may be desirable for efficient heat transfer.

Exemplary polymers useful for forming the high refractive index optical layers include polyethylene terephthalate (PET), available from 3M Company, and also available from Nan Ya Plastics Corporation, Wharton, TX. Copolymers of PET including PETG and PCTG under the trade designation "SPECTAR 14471" and "EASTAR GN071" from Eastman Chemical Company, Kingsport, TN, are also useful high refractive index layers. The molecular orientation of PET and CoPET may be increased by stretching which increases its in-plane refractive indices providing even more reflectivity in the multilayer optical film.

UV stabilization with UV-absorbers (UVAs) and Hindered Amine Light Stabilizers (HALs) can intervene in the prevention of photo-oxidation degradation of PETs, PMMAs, and CoPMMAs. UVAs for incorporation into PET, PMMA, or CoPMMA optical layers include benzophones, benzotriazoles, and benzotriazines. Exemplary UVAs for incorporation into PET, PMMA, or CoPMMA optical layers include those available under the trade designations "TINUVIN 1577" and "TINUVIN 1600," from BASF Corporation, Florham Park, NJ. Typically, UVAs are incorporated in the polymer at a concentration of 1-10 wt%. Exemplary HALs for incorporation into PET, PMMA, or CoPMMA optical layers include those available under the trade designations "CHIMMASORB 944" and "TINUVIN 123," from BASF Corporation. Typically, the HALs are incorporated into the polymer at are 0.1-1.0 wt%. A 10:1 ratio of UVA to HALs can be optimum.

UVAs and HALs can also be incorporated into the fluoropolymer surface layer, or a fluoropolymer layer below the surface layer. U.S. Pat. No. 9,670,300 (Olson et al.) and U.S. Pat. App. Pub. No. 2017/0198129 (Olson et al.), describe exemplary UVA oligomers that are compatible with PVDF fluoropolymers.

Other UV blocking additives may be included in the fluoropolymer surface layer. Small particle non-pigmentary zinc oxide and titanium oxide can also be used as UV blocking additives in the fluoropolymer surface layer. Nanoscale particles of zinc oxide and titanium oxide will reflect, or scatter, UV light while being transparent to visible and near infrared light. These small zinc oxide and titanium oxide particles that can reflect UV light are available, for example, in the size range of 10-100 nanometers from Kobo Products, Inc., South Plainfield, NJ.

Anti-stat additives may also be useful for incorporation into either the fluoropolymer surface layer or into the optical layers to reduce unwanted attraction of dust, dirt, and debris. Ionic salt anti-stats available from 3M Company may be incorporated into PVDF fluoropolymer layers to provide static dissipation. Anti-stat additives for PMMA and CoPMMA (e.g., available under the trade designation "STAT-RITE" from Lubrizol Engineered Polymers, Brecksville, OH, or under the trade designation "PELESTAT" from Sanyo Chemical Industries, Tokyo, Japan).

Outer layer **202** includes a polymer of TFE, HFP, and vinylidene fluoride.

First optical layers **210** include a polymer of TFE, HFP, and vinylidene fluoride and second optical layers **212** may include a polyethylene terephthalate (PET).

Article **112** may include at least two different materials. The absorbance spectra of each material alone may not provide high absorbance throughout the absorptive band. Two materials, however, that have complementary absorbance spectra (described herein in more detail) may cooperatively provide article **112** with high absorbance throughout the absorptive band. For example, a first material may have a transmission peak centered at a wavelength in the absorptive band, which may not radiate enough energy in the 8 to 13 micrometer atmospheric window region, but a second material may have a complementary absorption peak centered around the same wavelength in the absorptive band.

A transmission peak may be described as a transmittance greater than 10%, or an absorbance of less than 1. An absorption peak may be described as an absorption of at least 1, or a transmittance of at most 10%. Other transmittance or absorbance values, however, which may be described herein, may be used to define thresholds for transmission and absorption peaks. A transmission peak or absorbance peak may exceed the selected threshold in a bandwidth of at least 10 (in some embodiments, at least 20, 30, 40, 50, 75, or even at least 100) nanometers.

In one example, one of the layers in article 112, such as outer layer 202 or one of the layers of reflector 204, may include a first material having a minimum absorbance of less than 1 (a transmission peak) located in a third wavelength range contained in the second wavelength range. A different layer in article 112 may include a second material having a minimum absorbance of at least 1 (an absorption peak) in the third wavelength range. The absorption peak of the second material absorbs light that would otherwise pass through the transmission peak of the first material. In this manner, two or more materials may sufficiently absorb most of the light in the 8 to 13 micrometer absorbance band in a complementary manner.

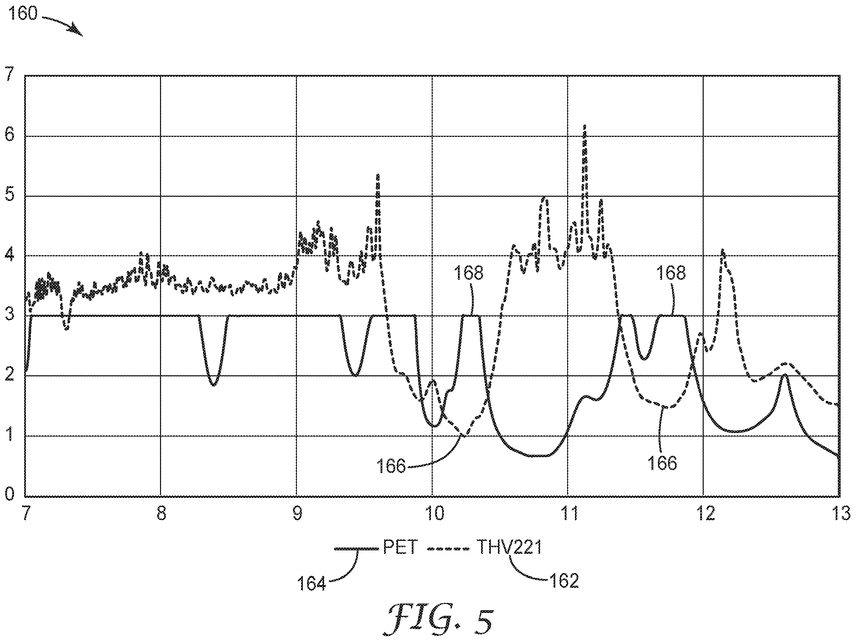

Absorbance and transmission peaks may be seen in FIG. 5, which shows graph 160 of absorbance 162 of a "3M DYNEON THV" fluoropolymer (e.g., a polymer of TFP, HFP, and vinylidene fluoride) and absorbance 164 of a PET polymer. The fluoropolymer may include at least one transmission peaks 166, for example, centered at 10.2 and 11.8 micrometers. The PET may include at least one absorption peak 168, for example, centered at 10.3 and 11.8 micrometers. Selecting materials with complementary overlapping absorption and transmission peaks may synergistically facilitate high absorbance throughout the absorptive band. For example, overall from 8 to 13 micrometers, the layers together have a minimum absorbance of least 1.4, compared to individual absorbances as low as 0.6 and 1 for PET and THV, respectively.

Turning back to FIG. 4, metallic layer 208 may be disposed on substrate layer 110 or on the bottom of film 206. In some embodiments, metallic layer 208 is coated onto substrate layer 110 or under the film 206. Metallic layer 208 may be disposed between substrate layer 110 and film 206. Metallic layer 208 may reflect light for at least part of the reflective band. In some embodiments, metallic layer 208 reflects light over the wavelength range of 500 to 2500 nanometers (in some embodiments, 600 to 2500 nanometers, or even 700 to 3000 nanometers).

In some embodiments, optical film 206 or metallic layer 208 alone may not provide high reflectance throughout the reflective band. Metallic layer 208 and film 206 may have complementary reflectance spectra and together may provide article 112 with high reflectance throughout the reflective band. For example, film 206 may be highly reflective in one range of the reflective band and metallic layer 208 may be highly reflective in another range of the reflective band where the film is not highly reflective. A high reflectance may be described as an average reflectance of at least 90%. Other reflectance values, however, which may be described herein, may be used to define high reflectance.

In some embodiments, film 206 is highly reflective in a lower wavelength range and metallic layer 208 is highly reflective in a higher wavelength range, which is adjacent to the lower wavelength range. In one example, film 206 is highly reflective in a range from 0.35 to 0.8 micrometer, and metallic layer 208 is highly reflective in a complementary range from 0.8 to 2.5 micrometers. In other words, the high reflective range of metallic layer 208 begins near where highly reflective range of film 206 ends. Together, film 206 and the metallic layer 208 may provide high reflectivity in a range from 0.35 to 2.5 micrometers.

In some embodiments, metallic layer 208 may have an average reflectance of at least 90% in a wavelength range of at least 0.8 to 2.5 micrometers (in some embodiments, at least 0.7 to 3.0 micrometers).

Non-limiting examples of metals used in the metallic layer 208 include at least one of: silver (Ag), copper (Cu), aluminum (Al), gold (Au), Inconel, stainless steel, or various combinations thereof. In some embodiments, metallic layer 208 comprises a 100-nanometer thick layer of silver and a 20-nanometer thick layer of copper to protect the silver from corrosion.

Alternatively, or in addition to selecting high absorptivity material, outer layer 202 or film 206 may include structures that provide high absorptivity in the atmospheric window region. In particular, the structures may be sized appropriately to increase the absorptivity of article 112.

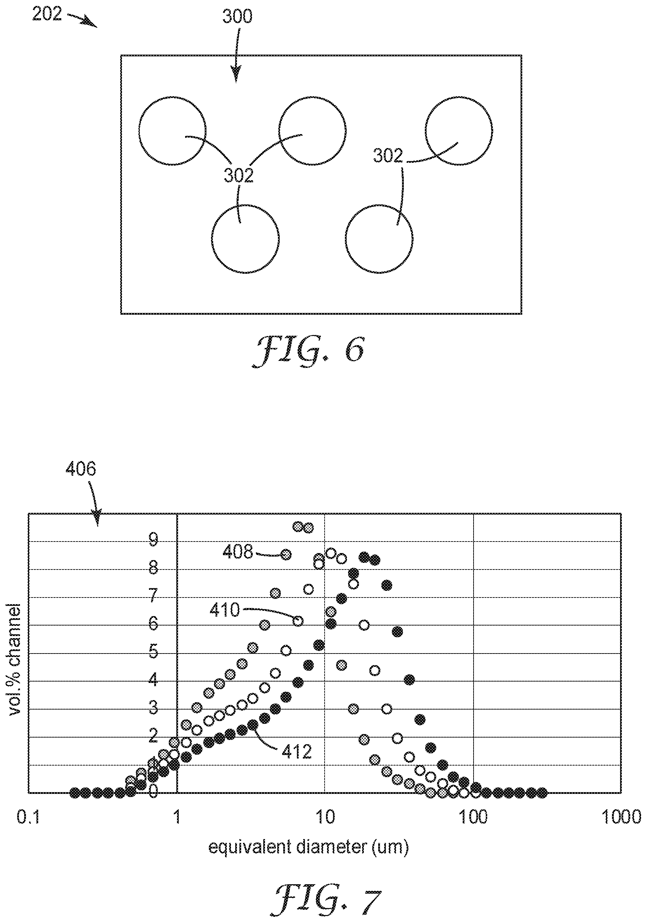

Surface 300 of outer layer 202 may be seen in a top-down view in FIG. 6. As illustrated, plurality of structures 302 may be disposed in or on the surface of at least one of the layers, such as outer layer 202. The structures may be dispersed evenly through at least one of the layers, such as outer layer 202. In some embodiments, structures 302 may be disposed in or on the surface and be dispersed evenly through at least one of the layers. The arrangement of structures 302 may be described as an array, which may be two dimensional or three dimensional.

Structures 302 may include inorganic particles. For example, each structure 302 depicted may correspond to one inorganic particle. The inorganic particles may be dispersed in or disposed on at least one layer. The inorganic particles may comprise titania, silica, zirconia, or zinc oxide. The inorganic particles may be in the form of nanoparticles including; nanotitania, nanosilica, nanozirconia, or even nano-scale zinc oxide particles. The inorganic particles may be in the form of beads or microbeads. The inorganic particles may be formed of a ceramic material, glass, or various combinations of thereof. In some embodiments, the inorganic particles have an effective $D_{90}$ particle size of at least 1 (in some embodiments, at least 3, 5, 6, 7, 8, 9, 10, or even at least 13) micrometers. In some embodiments, the inorganic particles have an effective $D_{90}$ particle size of at most 40 (in some embodiments, at most 25, 20, 15, 14, 13, 12, 11, 10, 9, or even at most 8) micrometers.

As defined in NIST "Particle Size Characterization," ASTM E-2578-07 (2012) describes $D_{90}$ as the intercept where 90% of the samples mass has particles with a diameter less than the value. For example, a $D_{90}$ of 10 micrometers specifies that 90% of the samples mass includes particles with diameters less than 10 micrometers. Particle diameter may be measured with a particle size analyzer (e.g., available under the trade designation "HORIBA PARTICLE SIZE ANALYZER" from Flow Sciences, Inc., Leland, NC).

Graph 406 in FIG. 7 shows size distributions 408, 410, 412 of non-limiting examples of ceramic microspheres that may be used as inorganic particles. Graph 406 shows ceramic microspheres available under the trade designations "3M CERAMIC MICROSPHERES WHITE GRADE W-210" (alkali aluminosilicate ceramic, effective $D_{90}$ particle size of 12 micrometers) as distribution 408, "3M CERAMIC MICROSPHERES WHITE GRADE W-410" (alkali aluminosilicate ceramic, effective $D_{90}$ particle size of 21 micrometers) as distribution 410, "3M CERAMIC MICROSPHERES WHITE GRADE W-610" (alkali aluminosilicate ceramic, effective $D_{90}$ particle size of 32 micrometers) as distribution 412, from 3M Company, or various combinations thereof. In general, various combinations of inorganic particles of the same or different size may be used.

Structures 302 may include surface structures. The surface structures may be disposed on a surface, such as surface 300 of outer layer 202 or a surface of film 206. In some embodiments, the surface structures may be integrated into or on the surface. For example, the surface structures may be formed by extrusion replication or micro-replication on at least one of the layers, as described in U.S. Provisional App. Serial No. 62/611639, filed the same date as the instant application. The surface structures may or may not be formed of the same material as the at least one layer.

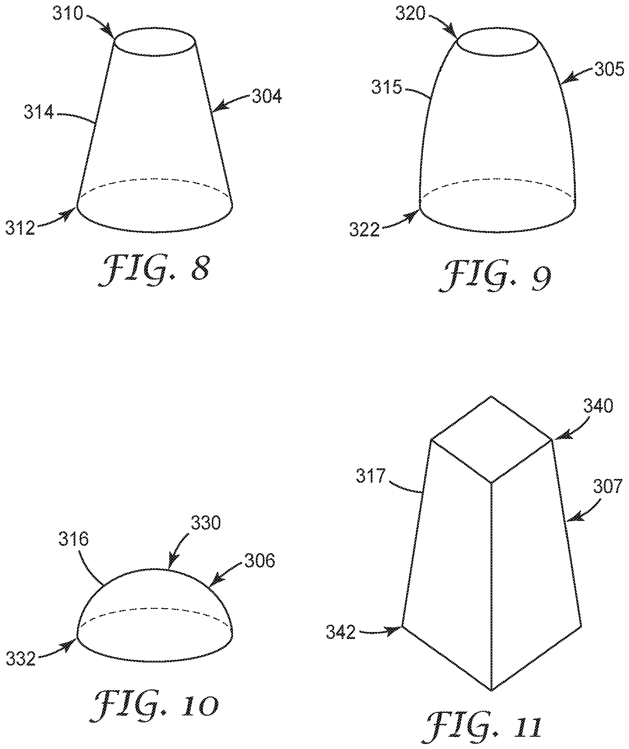

As can be seen in FIGS. 8-11, surface structures 304, 305, 306, 307 may define first widths 310, 320, 330, 340 and second widths 312, 322, 332, 342. First widths 310, 320, 330, 340 may be described as outer widths, and second widths 312, 322, 332, 342 may be described as base widths. In some embodiments, the surface structures 304, 305, 306, 307 may have an average width in a range of 1 to 40 micrometers, which may facilitate emissivity or absorptivity in the atmospheric window region. Surface structure 304, 305, 306, 307 may include sidewall 314, 315, 316, 317 defining each width 310, 312, 320, 322, 330, 332, 340, 342.

The sidewalls 314, 315, 316, 317 may take various geometries. Some geometries may be particularly suited to certain manufacturing processes. The geometries may be defined by a cross-section extending between first width 310, 320, 330, 340 and second width 312, 322, 332, 3442. Surface structures 304, 305, 306 may be described as conical or having a cone-like shape. As used herein, the term "width" may refer to a diameter of structure 304, 305, 306, for example, when the cross-section of the structure is circular, oval, or cone-like. In FIG. 8, the cross-section of sidewall 314 of surface structure 304 may include at least one straight line between widths 310, 312. First width 310 may be smaller than the second width 312 to define a slope. In FIGS. 9-10, the cross-section of sidewalls 315, 316 of surface structures 305, 306, respectively, may include at least one curve or arc between respective first and second widths 320, 322 and 330, 3332. In FIG. 9, width 320 is non-zero to give a tapered cylindrical shape to surface structure 305. In FIG. 10, width 330 is equal to zero to give a hemispherical shape to surface structure 306. In some embodiments, the surface structure 306 may be spheroid, or even an ellipsoid shape. As can be seen in FIG. 11, surface structure 307 may be described as a square- or rectangular-shaped post. The cross-section of sidewall 317 of surface structure 307 may be include a straight line between widths 340, 342, as illustrated, or may even include at least one curve or arc between the widths. Sidewall 317 may define a slope, wherein first width 340 is less than second width 342, as illustrated, or may even be vertical, wherein the first and second widths are equal.

Each structure 304, 305, 306, 307 may protrude from the surface by a height extending orthogonal to the surface. The width of each structure 304, 305, 306, 307 may be defined orthogonal to the height and parallel to the surface. In some embodiments, each surface structure 304, 305, 306, 307 has an average width of at least 1 (in some embodiments, at least 3, 5, 6, 7, 8, 9, or even at least 10) micrometers. In some embodiments, each surface structure 304, 305, 306, 307 has an average width of at most 50 (in some embodiments, at most 20, 15, 14, 13, 12, 11, 10, 9, or even at most 8) micrometers. In some embodiments, each surface structure 304, 305, 306, 307 has an average height of at least 1 (in some embodiments, at least 3, 5, 6, 7, 8, 9, or even at least 10) micrometers. In some embodiments, each surface structure 304, 305, 306, 307 has an average height of at most 50 (in some embodiments, at most 20, 15, 14, 13, 12, 11, 10, 9, or even at most 8) micrometers.

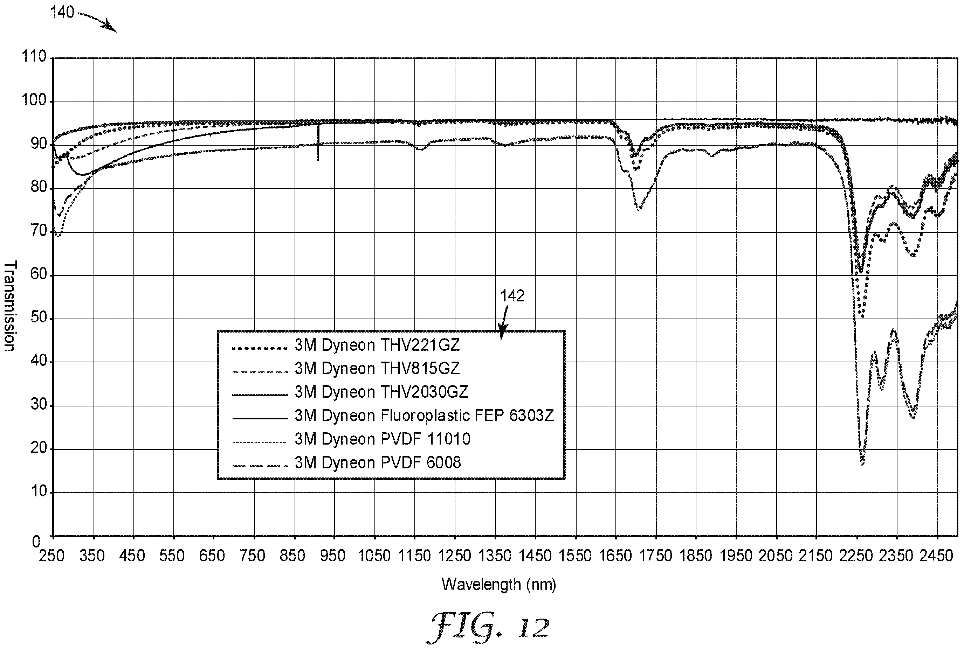

FIG. 12 shows graph 140 of transmission spectra of various fluoropolymer materials 142 with high transmittance or low absorbance at least in reflective band 128 (FIG. 3) that may be used in a passive cooling article, such as article 112 (FIG. 4). At least one of the fluoropolymer materials 142 may be used in at least one layer of the article. Graph 140 shows transmittance for various cast samples of fluoropolymers 142, including various of "3M DYNEON THV" fluoropolymer, "3M DYNEON THVP" fluoropolymer, FEP, and PVDF. In particular, graph **140** shows "3M DYNEON THV221GZ," "3M DYNEON THV815GZ," "3M DYNEON THV2030GZ," "3M DYNEON FLUOROPLASTIC FEP 6303Z," "3M DYNEON PVDF 11010," and "3M DYNEON PVDF 6008." In general, various combinations of fluoropolymers may be used.

Exemplary fluoropolymers for the first layer include those available under the trade designations "3M DYNEON THV221GZ" (39 mol% tetrafluoroethylene, 11 mol% hexafluoropropylene, and 50 mol% vinylidene fluoride), "3M DYNEON THV2030GZ" (46.5 mol% tetrafluoroethylene, 16.5 mol% hexafluoropropylene, 35.5 mol% vinylidene fluoride, and 1.5 mol% perfluoropropyl vinylether), "3M DYNEON THV610GZ" (61 mol% tetrafluoroethylene, 10.5 mol% hexafluoropropylene, and 28.5 mol% vinylidene fluoride), and "3M DYNEON THV815GZ" (72.5 mol% tetrafluoroethylene, 7 mol% hexafluoropropylene, 19 mol% vinylidene fluoride, and 1.5 mol% perfluoropropyl vinylether), from 3M Company.

At least one of fluoropolymer materials **142** may have a high transmittance or low absorbance (which may be calculated from the transmittance) as defined by a minimum transmittance or average transmittance of at least 50% (in some embodiments, at least 60%, 70%, 80%, 90%, or at least 95%) in the reflective band (e.g., 250 to 2500 nanometers). For example, as illustrated, "3M DYNEON THV221GZ" has an average transmittance of at least 90% for a reflective band defined from 0.25 to 2.25 micrometers.

At least one of fluoropolymer materials **142** may have high transmittance or low absorbance for most of the reflective band, such at least 50% (in some embodiments, at least 60%, 70 80%, at least 90%, or even 100%) of the reflective band. For example, as illustrated, "3M DYNEON THV2030GZ" has a high transmittance of at least 90% for at least 90% of a reflective band defined from 0.25 to 2.15 micrometers.

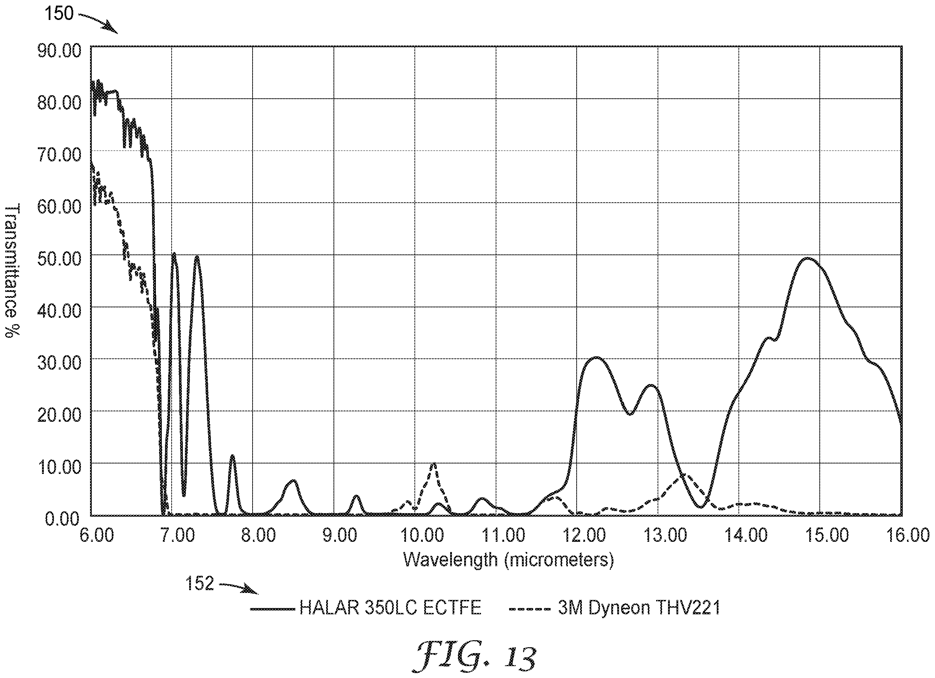

**FIG. 13** shows graph **150** of transmission spectra of various fluoropolymer materials **152** with high absorbance or low transmittance at least in absorptive band **130 (FIG. 3)** (e.g., 8 to 13 micrometers). At least one of the fluoropolymer materials **152** may be used in at least one layer of an article, such as article **112 (FIG. 4).** In particular, graph **150** shows transmittance for various cast samples of fluoropolymers **152,** including an ECTFE under trade designation "HALAR 350LC ECTFE" and a fluoropolymer under trade designation "3M DYNEON THV221GZ."

At least one of fluoropolymer materials **152** may have high absorbance or high average absorbance, which may be defined as absorbance of at least 0.15 (in some embodiments, at least 0.3, 0.45, 0.6, 0.8, 1, 1.5, 2, 2.5, 3, 3.5, 4, 4.5, or even at least 5) in absorptive band **130.** For example, as shown in graph **150,** the fluoropolymer has a high absorbance of at least 1 for an absorptive band defined from 7 to 16 micrometers.

At least one of fluoropolymer materials **152** may have the high absorbance or high average absorbance for most of the absorptive band, such as at least 50% (in some embodiments, at least 60%, 70%, 80%, at least 90%, or even 100%), of the absorption band **130.** For example, as shown in graph **150,** the ECTFE has a high absorbance of at least 1 for at least 70% of an absorptive band defined from 7 to 13 micrometers.

EXAMPLES

The following Examples are merely for illustrative purposes and are not meant to be overly limiting on the scope of the appended claims. Notwithstanding that the numerical ranges and parameters setting forth the broad scope of the present disclosure are approximations, the numerical values set forth in the specific examples are reported as precisely as possible. Any numerical value, however, inherently contains certain errors necessarily resulting from the standard deviation found in their respective testing measurements. At the very least, each numerical parameter should at least be construed in light of the number of reported significant digits and by applying ordinary rounding techniques.

COMPUTER-SIMULATION METHOD

The 4x4 matrix method using the Berreman algorithm was used for modeling the spectra of constructive and destructive interference generated from layer interfaces of materials having different refractive indices. The Berreman 4x4 matrix methodology was described in the Journal of the Optical Society of America (Volume 62, Number 4, April 1972) and the Journal of Applied Physics (Volume 85, Number 6, March 1999). Input parameters for this optical model were individual polymer refractive indices, polymer layer thicknesses, number of polymer layers, and reflection bandwidth including a left band edge and a right band edge. The Berreman methodology calculates the percent light reflected at each layer interface and the percent light transmitted at each layer interface and outputs a reflection spectra and transmission spectra.

EXAMPLE 1

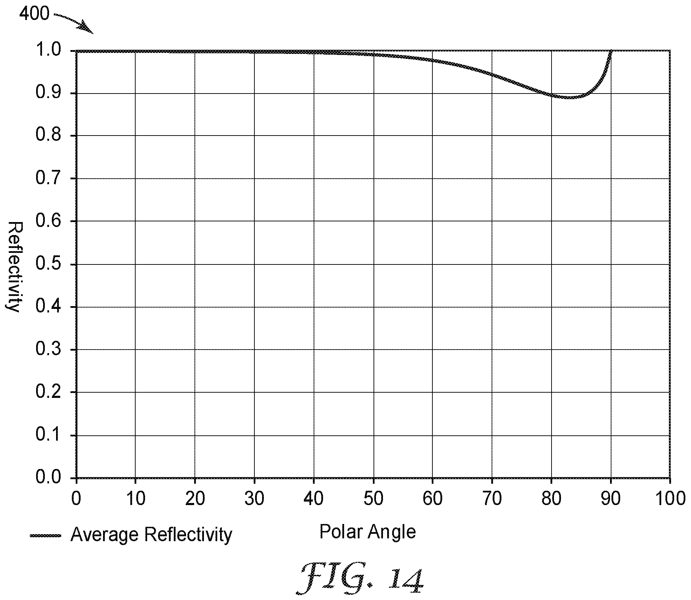

In Example 1, input parameters for a first reflector were selected to model a multi-layer optical film using polyethylene terephthalate (PET) as the high refractive index (n=1.65) layers and fluoropolymer available under trade designation "3M DYNEON THV221GZ" from 3M Company (St. Paul, MN), as the low refractive index (n=1.35) layers. Using 200 layers, the thickness of each layer in the multi-layer optical film ranged from 80 to 200 nanometers and was designed reflect ultraviolet and visible light in a range from 350 to 800 nanometers. In the model, the multi-layer optical film was disposed on a 100-nanometer layer of Ag and a 20-nanometer layer of Cu to form a metallic layer to provide high reflectivity from 800 to 2500 nanometers. In the model, an outer layer including the fluoropolymer ("3M DYNEON THV221GZ"), which can transmit energy in the 0.3 to 2.5 micrometer range and absorb energy in the 8 to 14 micrometer range, was disposed on the multi-layer optical film. The reflectance determined by the model is shown in graph **400** in **FIG. 14.** Graph **400** shows that the average reflectance was greater than 90% at all polar angles.

EXAMPLE 2

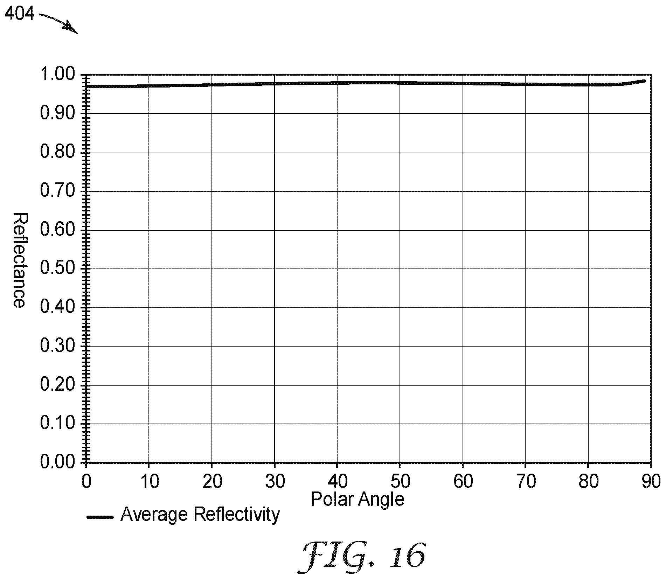

In Example 2, that is not according to the invention, input parameters for a second reflector were selected to model a multi-layer optical film using PET as the high refractive index (n=1.65) layers and co-PMMA as the low refractive index (n=1.49) layers. Using 600 total layers, the thickness of layers in the multi-layer optical film were designed to reflect ultraviolet and visible light in a range from 350 to 800 nanometers. In the model, the multi-layer optical film was disposed on a 100-nanometer layer of Ag and a 20-nanometer layer of Cu to form a metallic layer to provide high reflectivity from 800 to 2500 nanometers. In the model, an outer layer including the fluoropolymer ("3M DYNEON THV221GZ"), which can transmit energy in the 0.3 to 2.5 micrometer range and absorb energy in the 8 to 14 micrometer range, was disposed on the multi-layer optical film. The reflectance determined by the model is shown in graph **404** in **FIG. 16.** Graph **404** shows that, using 3x the thickness of the first reflector, the average reflectance of the second reflector was greater than 90% at all polar angles.

Thus, various embodiments of the PASSIVE COOLING ARTICLES HAVING A FLUOROPOLYMER are disclosed. Although reference is made herein to the accompanying set of drawings that form part of this disclosure, one of at least ordinary skill in the art will appreciate that various adaptations and modifications of the embodiments described herein are within, or do not depart from, the scope as defined in the appended claims. For example, aspects of the embodiments described herein may be combined in a variety of ways with each other. Therefore, it is to be understood that, within the scope of the appended claims, the claimed invention may be practiced other than as explicitly described herein.

Various modifications and alterations to this disclosure will become apparent to those skilled in the art without departing from the scope of this disclosure. It should be understood that this disclosure is not intended to be unduly limited by the illustrative embodiments and examples set forth herein and that such examples and embodiments are presented by way of example only with the scope of the disclosure intended to be limited only by the claims set forth herein as follows.

**Claims**

1. A passive cooling article (112) comprising:

a reflector (204) having an average reflectance of at least 85% in a first wavelength range from 0.35 to 2.5 micrometers, and
an outer layer (202) at least partially covering the reflector and
having an absorbance of at least 0.15 in a second wavelength range from 8 to 13 micrometers, **characterized in that** the reflector (204) comprises a plurality of first optical layers (210) and a plurality of second optical layers (212), wherein each of the first optical layers (210) comprises a fluoropolymer, the fluoropolymer comprising a polymer of tetrafluoroethylene, hexafluoropropylene and vinylidene fluoride, and **in that** the outer layer (202) comprises a fluoropolymer, the fluoropolymer comprising a polymer of tetrafluoroethylene, hexafluoropropylene, and vinylidene fluoride.

2. The article of claim 1, wherein the average reflectance of the reflector is at least 90% in the first wavelength range, and/or
wherein the absorbance of the article is at least 0.8 in the second wavelength range.

3. The article of claim 1 or claim 2, wherein a first refractive index of the plurality of first optical layers is less than a second refractive index of the plurality of second optical layers by at least 5%.

4. The article of any of claims 1 to 3, wherein the plurality of second optical layers comprises polyethylene terephthalate.

5. The article of claim 1, further comprising an array of inorganic particles at least one of dispersed in or disposed on at least one of the outer layer or the reflector and having an effective $D_{90}$ particle size of at most 40 micrometers.

6. The article of any preceding claim, wherein the reflector comprises a metallic layer (208) comprising at least one metal, the metallic layer having an average reflectance of at least 90% in a fourth wavelength range from 1.2 to 2 micrometers.

7. The article of claim 1, further comprising an array of surface structures formed on a surface of the outer layer and having an average width of at most 40 micrometers.

8. The article of any preceding claim, wherein the reflector has a maximum thickness of at most 40 micrometers.

9. The article of any preceding claim, wherein the fluoropolymer-containing outer layer has an absorbance of less than 1 in a third wavelength range, wherein the third wavelength range is contained in the second wavelength range and has a frequency bandwidth of at least 10 micrometers, and at least one different layer in the article have an absorbance of at least 1 in the third wavelength range.

10. An apparatus comprising:

a substrate (110) capable of being cooled comprising at least a portion of a surface configured to be exposed to solar energy; and
the article (112) of any one of the preceding claims covering at least the portion of the surface of the substrate to reflect solar energy directed toward the surface, optionally wherein the substrate is connectable to a heat transfer system.

**Patentansprüche**

1. Ein passiver Kühlgegenstand (112), aufweisend:

einen Reflektor (204), der einen durchschnittlichen Reflexionsgrad von mindestens 85 % in einem ersten Wellenlängenbereich von 0,35 bis 2,5 Mikrometer aufweist, und
eine Außenschicht (202), die den Reflektor mindestens teilweise abdeckt und eine Absorption von mindestens 0,15 in einem zweiten Wellenlängenbereich von 8 bis 13 Mikrometer aufweist, **dadurch gekennzeichnet, dass** der Reflektor (204) eine Mehrzahl von ersten optischen Schichten (210) und eine Mehrzahl von zweiten optischen Schichten (212) aufweist, wobei jede der ersten optischen Schichten (210) ein Fluorpolymer aufweist, das Fluorpolymer aufweisend ein Polymer von Tetrafluorethylen, Hexafluorpropylen und Vinylidenfluorid, und **dadurch, dass** die Außenschicht (202) ein Fluorpolymer aufweist, das Fluorpolymer aufweisend ein Polymer aus Tetrafluorethylen, Hexafluorpropylen und Vinylidenfluorid.

2. Der Gegenstand nach Anspruch 1, wobei der durchschnittliche Reflexionsgrad des Reflektors mindestens 90 % in dem ersten Wellenlängenbereich beträgt, und/oder
wobei die Absorption des Gegenstands in dem zweiten Wellenlängenbereich mindestens 0,8 beträgt.

3. Der Gegenstand nach Anspruch 1 oder 2, wobei eine erste Brechzahl der Mehrzahl von ersten optischen Schichten kleiner als eine zweite Brechzahl der Mehrzahl von zweiten optischen Schichten um mindestens 5 % ist.

4. Der Gegenstand nach einem der Ansprüche 1 bis 3, wobei die Mehrzahl von zweiten optischen Schichten Polyethylenterephthalat aufweist.

5. Der Gegenstand nach Anspruch 1, ferner aufweisend eine Anordnung anorganischer Teilchen, die mindestens auf einem von der Außenschicht oder dem Reflektor mindestens eines von dispergiert oder darauf angeordnet sind und eine wirksame $D_{90}$-Teilchengröße von höchstens 40 Mikrometer aufweisen.

6. Der Gegenstand nach einem der vorstehenden Ansprüche, wobei der Reflektor eine metallische Schicht (208) aufweist,
aufweisend mindestens ein Metall, wobei die metallische Schicht einen durchschnittlichen Reflexionsgrad von mindestens 90 % in einem vierten Wellenlängenbereich von 1,2 bis 2 Mikrometer aufweist.

7. Der Gegenstand nach Anspruch 1, ferner aufweisend eine Anordnung von Oberflächenstrukturen, die auf einer Oberfläche der Außenschicht ausgebildet sind und eine durchschnittliche Breite von höchstens 40 Mikrometern aufweisen.

8. Der Gegenstand nach einem der vorstehenden Ansprüche, wobei der Reflektor eine maximale Dicke von höchstens 40 Mikrometer aufweist.

9. Der Gegenstand nach einem der vorstehenden Ansprüche, wobei die fluorpolymerhaltige Außenschicht eine Absorption von weniger als 1 in einem dritten Wellenlängenbereich aufweist, wobei der dritte Wellenlängenbereich in dem zweiten Wellenlängenbereich enthalten ist und eine Frequenzbandbreite von mindestens 10 Mikrometer aufweist und mindestens eine andere Schicht in dem Gegenstand eine Absorption von mindestens 1 im dritten Wellenlängenbereich aufweist.

10. Eine Einrichtung, aufweisend:

ein Substrat (110), das gekühlt werden kann, mindestens aufweisend einen Abschnitt einer Oberfläche, der konfiguriert ist, um Solarenergie ausgesetzt zu werden; und
wobei der Gegenstand (112) nach einem der vorstehenden Ansprüche mindestens den Abschnitt der Oberfläche des Substrats abdeckt, um Sonnenenergie zu reflektieren, die zu der Oberfläche hin gerichtet ist, optional wobei das Substrat mit einem Wärmeübertragungssystem verbindbar ist.

**Revendications**

1. Article de refroidissement passif (112) comprenant :

un réflecteur (204) ayant une réflectance moyenne d'au moins 85 % dans une première plage de longueur d'onde allant de 0,35 à 2,5 micromètres, et

une couche externe (202) recouvrant au moins partiellement le réflecteur et ayant une absorbance d'au moins 0,15 dans une deuxième plage de longueur d'onde allant de 8 à 13 micromètres,

**caractérisé en ce que** le réflecteur (204) comprend une pluralité de premières couches optiques (210) et une pluralité de secondes couches optiques (212), chacune des premières couches optiques (210) comprenant un fluoropolymère, le fluoropolymère comprenant un polymère de tétrafluoroéthylène, d'hexafluoropropylène et de fluorure de vinylidène, et **en ce que** la couche externe (202) comprend un fluoropolymère, le fluoropolymère comprenant un polymère de tétrafluoroéthylène, d'hexafluoropropylène et de fluorure de vinylidène.

2. Article selon la revendication 1, dans lequel la réflectance moyenne du réflecteur est d'au moins 90 % dans la première plage de longueur d'onde, et/ou dans lequel l'absorbance de l'article est d'au moins 0,8 dans la deuxième plage de longueur d'onde.

3. Article selon la revendication 1 ou la revendication 2, dans lequel un premier indice de réfraction de la pluralité de premières couches optiques est inférieur à un second indice de réfraction de la pluralité de secondes couches optiques d'au moins 5 %.

4. Article selon l'une quelconque des revendications 1 à 3, dans lequel la pluralité de secondes couches optiques comprend du téréphtalate de polyéthylène.

5. Article selon la revendication 1, comprenant en outre un réseau de particules inorganiques étant au moins l'un parmi dispersées dans ou disposées sur au moins l'un parmi la couche externe ou le réflecteur et ayant une taille de particules $D_{90}$ effective d'au plus 40 micromètres.

6. Article selon l'une quelconque revendication précédente, dans lequel le réflecteur comprend une couche métallique (208) comprenant au moins un métal, la couche métallique ayant une réflectance moyenne d'au moins 90 % dans une quatrième plage de longueur d'onde allant de 1,2 à 2 micromètres.

7. Article selon la revendication 1, comprenant en outre un réseau de structures de surface formé sur une surface de la couche externe et ayant une largeur moyenne d'au plus 40 micromètres.

8. Article selon l'une quelconque revendication précédente, dans lequel le réflecteur a une épaisseur maximale d'au plus 40 micromètres.

9. Article selon l'une quelconque revendication précédente, dans lequel la couche externe contenant un fluoropolymère a une absorbance inférieure à 1 dans une troisième plage de longueur d'onde, la troisième plage de longueur d'onde étant contenue dans la deuxième plage de longueur d'onde et a une largeur de bande de fréquence d'au moins 10 micromètres, et au moins une couche différente dans l'article a une absorbance d'au moins 1 dans la troisième plage de longueur d'onde.

10. Appareil comprenant :

un substrat (110) capable d'être refroidi comprenant au moins une partie d'une surface conçue pour être exposée à de l'énergie solaire ; et l'article (112) selon l'une quelconque des revendications précédentes recouvrant au moins la partie de la surface du substrat pour réfléchir de l'énergie solaire dirigée en direction de la surface, facultativement dans lequel le substrat peut être raccordé à un système de transfert thermique.

100

108

104

112

110

*FIG. 1*

102

108

106

112

110

*FIG. 2*

*FIG. 3*

_FIG. 4_

FIG. 5

EP 3 732 514 B1

*FIG. 6*

*FIG. 7*

FIG. 8

FIG. 9

FIG. 10

FIG. 11

*FIG. 12*

EP 3 732 514 B1

*FIG. 13*

*FIG. 14*

*FIG. 15*

EP 3 732 514 B1

404

*FIG. 16*

EP 3 732 514 B1

**EP 3 732 514 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62611639
- WO 2017151514 A1
- US 2017248381 A
- US 2015338175 A

- US 6783349 B, Neavin
- US 9670300 B, Olson
- US 20170198129, Olson

**Non-patent literature cited in the description**

- *Journal of the Optical Society of America,* April 1972, vol. 62 (4

- *Journal of Applied Physics,* 06 March 1999, vol. 85